# EUROPEAN PATENT APPLICATION

(11) **EP 2 613 475 A2**
(43) Date of publication of application: **10.07.2013**
(21) Application number: 13150272.6
(22) Date of filing: 04.01.2013
(51) Int. Cl.: H04L 12/46

(54) **Loop containment enhancement**

(30) Priority: 05.01.2012 US 201213344284
(71) Applicant: General Electric Company, Schenectady, New York 12345 (US)
(72) Inventor: Caffrey, Paul O., Salem, VA 24153 (US); Daniels, Matthew, Salem, VA 24153 (US); Asfaw, Mark, Aldie, VA 20105 (US)
(74) Representative: Picker, Madeline Margaret

(57) **Abstract**

Systems, methods, and apparatus for providing a communication network free of bridge loops by providing a first message from one of two bridges and a second message in response to the first message from the other of the two bridges and establishing a communicative path if both the first and second messages were received.

## Description

### BACKGROUND OF THE INVENTION

This invention generally relates to computer communication networks, and in particular to methods, apparatus, and systems for preventing loops within the network.

Computer communication networks, such as local area networks (LANs), typically have several bridges with multiple links interconnecting between the several bridges to carry data therebetween. The several bridges in the network may have various levels of connectivity in terms of both the number of pathways to a particular bridge, as well as, the number of other bridges a particular bridge is connected to. Each of the bridges can have multiple ports that can be used to establish a point-to-point link from the bridge to another bridge or an end terminal, such as a desktop computer. The ports of each of the bridges can be selectively activated or deactivated based upon whether a particular link is required in the network.

Often times there is also a hierarchy associated with the several bridges in the network, where each of the bridges may have various levels of priority within the network. For example, the bridge with the highest level of priority may be designated a root bridge and the network may be required to establish a communicative pathway from each of the several bridges to the root bridge.

Therefore, when a network is set up or a new node or new bridge is added to an existing network, each bridge must first determine which bridge is the root bridge and then establish a pathway to communicate with the root bridge, as well as, other predetermined bridges of the network. Rapid spanning tree protocol (RSTP), standardized as Institute of Electrical and Electronic Engineers (IEEE) standard 802.1D, is currently used to establish a pathway for each of the bridges of the network to be able to communicate with the root bridge. The RSTP may first establish a root bridge, determine least cost paths to the root bridge from each of the other bridges, and disable all other paths, other than the least cost path to the root bridge from each of the bridges. This process may entail sending a message from the root bridge to another bridge and then having the root bridge establish a link between the two bridges by selectively placing ports along the link in a forwarding state. Therefore, unidirectional messaging is performed in the process of the root bridge placing ports in a forwarding state.

There is a possibility that during changes in the network, such as if one or more ports temporarily cease to function, such as due to hardware failure including port transceiver failure, or if new nodes are added or removed from the network, then a loop may occur in the network. A loop occurs when there is more than one active path between any two communicating bridges and can lead to network instability by providing the possibility of a broadcast storm, or an excessive amount of broadcast data. A bridge can rebroadcast a broadcast message repeatedly when a loop exists in the network, potentially overwhelming the network's capability in handling a large number of messages.

### BRIEF SUMMARY OF THE INVENTION

Certain embodiments of the invention can provide systems, methods, and apparatus for loop containment enhancement in a communication network. Certain embodiments of the invention can include providing a communication network free of loops. Certain embodiments of the invention can include loop free connections between two or more bridges in a network.

In one embodiment, a method can include providing a first bridge with at least one port, and providing a second bridge with at least one port and transmitting a first message from one of a first port on the first bridge selected from the at least one port of the first bridge and a second port on the second bridge selected from the at least one port of the second bridge. The method can further include transmitting a second message from the other of the first port and the second port and establishing a connection between the first bridge and the second bridge via the first port and the second port if both the first and the second message were received by one of the first and second bridge.

In another embodiment, a communication bridge can include at least one port, one or more paths, each path connected to one or more of the at least one ports, and a bridge controller controlling a state of each of the at least one ports, wherein a message is received at one of the at least one port via the corresponding path and a second message is transmitted by the communication bridge on the same one of the at least one port upon receiving the message.

In yet another embodiment, a system can include a root bridge having at least one port, a second bridge having at least one port and a second bridge controller for controlling the state of the at least one port of the second bridge, and at least one path between the root bridge and the second bridge, each path corresponding to one of the at least one port of the second bridge. Furthermore, one path selected from the at least one path can be established as a communicative pathway between the root bridge and the second bridge by sending a first and second message between the root bridge and the second bridge and the second bridge controller placing the port corresponding to the communicative pathway in a forwarding state if the first and second messages were received.

Other embodiments, features, and aspects of the invention are described in detail herein and are considered a part of the claimed inventions. Other embodiments, features, and aspects can be understood with reference to the following detailed description, accompanying drawings, and claims.

### BRIEF DESCRIPTION OF THE FIGURES

Reference will now be made to the accompanying tables and drawings, which are not necessarily drawn to scale, and wherein:
FIG. 1 is a block diagram representation of an example communication network that can be operated in accordance with an embodiment of the invention.
FIG. 2A is a block diagram representation of the communication network of FIG. 1 where an example message is sent between a root bridge and a second bridge in accordance with an embodiment of the invention.
FIG. 2B is a block diagram representation of the communication network of FIG. 1 where an example response message is sent between the second bridge and the root bridge in accordance with an embodiment of the invention.
FIG. 3 is a block diagram representation of the communication network of FIG. 1 where an example final configuration of the network is determined in accordance with an embodiment of the invention.
FIG. 4 is a flow diagram of an example method to establish a communicative pathway between a first and second bridge according to an embodiment of the invention.

### DETAILED DESCRIPTION OF EMBODIMENTS OF THE INVENTION

Embodiments of the invention are described more fully hereinafter with reference to the accompanying drawings, in which embodiments of the invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. Like numbers refer to like elements throughout.

Embodiments of the invention may provide apparatus, systems, and methods for loop containment enhancement in a communication network. In certain embodiments, a more robust communications network that has greater immunity from broadcast storm failures can be implemented. Such improvements may entail providing communications networks that are free from loops. In one aspect, a loop-free network may be established by sending messages from a bridge to another bridge via a port and then monitoring the port for a return message and upon receiving a return message, establishing the port for communicating between the two bridges. Further improvements may include a more robust reconfiguration of a communication network if a hardware failure is experienced. Preventing loops in the communication network may be implemented by requiring two messages to be transmitted when establishing a connection from one port on one bridge to another port on another bridge. Establishing a communicative link, therefore, between two bridges may involve bi-directional messaging and may require the receipt of a confirmation message before establishing a communicative link.

Example embodiments of the invention will now be described with reference to the accompanying figures.

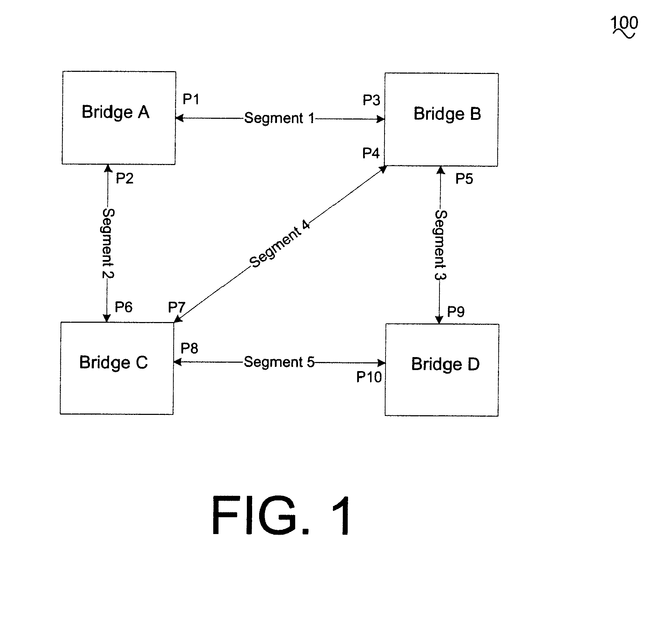

Referring now to FIG. 1, an example communication network 100 that can be operated in accordance to an embodiment of the invention can have four bridges, such as Bridge A, Bridge B, Bridge C, and Bridge D. Additionally, each bridge, Bridge A, Bridge B, Bridge C, and Bridge D, can have multiple ports, such as P1, P2, P3, P4, P5, P6, P7, P8, P9, P10, that can be used to establish communicative links, such as Segment 1, Segment 2, Segment 3, Segment 4, and Segment 5, between any two bridges.

It should be noted that each bridge may have multiple ports, such as, for example, 24 ports, 48 ports, or 96 ports. As illustrated, only a subset of, for instance, P1, P2, P3, P4, P5, P6, P7, P8, P9, P10, of the total number of ports of a bridge, such as Bridge A, Bridge B, Bridge C, and Bridge D, may be used to establish a communicative link, such as Segment 1, Segment 2, Segment 3, Segment 4, and Segment 5. For example, Bridge A is illustrated as using only two of its ports P1 and P2 to establish communicative link Segment 1 with Bridge B and Segment 2 with Bridge C.

Each of the ports P1, P2, P3, P4, P5, P6, P7, P8, P9, P10 can be in one of at least four states: (i) listening; (ii) learning; (iii) forwarding; and (iv) blocking. For a segment to be active, or capable of transmitting messages, the two ports associated with that segment must be in a forwarding state. For example, for Segment 1 to be active as a communicative link, both ports P1 and P3 must be in a forwarding state.

Continuing on with FIG. 1, one of the bridges Bridge A, Bridge B, Bridge C, and Bridge D can be designated the root bridge. Typically, the bridge with the highest priority level at the data link layer (DLL), or Open Systems Interconnections (OSI) model Layer 2, can be assigned as the root bridge. If two or more bridges have the same highest priority level then the bridge with the lowest media access control (MAC) address may be assigned as the root bridge. Once a root bridge is established, the network 100 can establish a communicative pathway between each of the bridges Bridge A, Bridge B, Bridge C, and Bridge D and the root bridge. The ports in a forwarding state and corresponding to a pathway between a particular bridge and the root bridge can be referred to as a root port.

The process of establishing a root bridge and setting states for each of the ports P1, P2, P3, P4, P5, P6, P7, P8, P9, P10 to establish root ports and links Segment 1, Segment 2, Segment 3, Segment 4, and Segment 5 from each of the bridges to the root bridge may require communication between the bridges Bridge A, Bridge B, Bridge C, and Bridge D. A bridge protocol data unit (BDPU) may be used to establish communication with and between the bridges Bridge A, Bridge B, Bridge C, and Bridge D. There may be various types of BDPUs, such as configuration BPDU, topology change notification BDPU, topology change notification acknowledgement BDPU, and the like.

The formation of network loops in a network will be explained by way of example by still referring to FIG. 1 and considering that Bridge A is designated the root bridge. In the network 100 topology as depicted in FIG. 1, there can be a possibility of loop formation when the root bridge Bridge A communicates with any of the other bridges Bridge B, Bridge C, and Bridge D. For example, when communicating between Bridge A and Bridge D, there is a possibility of four different pathways: (i) Segment 1 and Segment 3 via ports P1, P3, P5, and P9; (ii) Segment 2 and Segment 5 via ports P2, P6, P8, and P10; (iii) Segment 1, Segment 4, and Segment 5 via ports P1, P3, P4, P7, P8, and P10; and, (iv) Segment 2, Segment 4, and Segment 3 via ports P2, P6, P7, P4, P5, and P9. Having these multiple paths between the root bridge Bridge A and another bridge Bridge D can result in the formation of network loops. The network loops can lead to broadcast storms where messages are received by a particular bridge and retransmitted over multiple pathways, resulting in a cascade of messages that can potentially encumber the network 100 and in some cases lead to failure of the network 100.

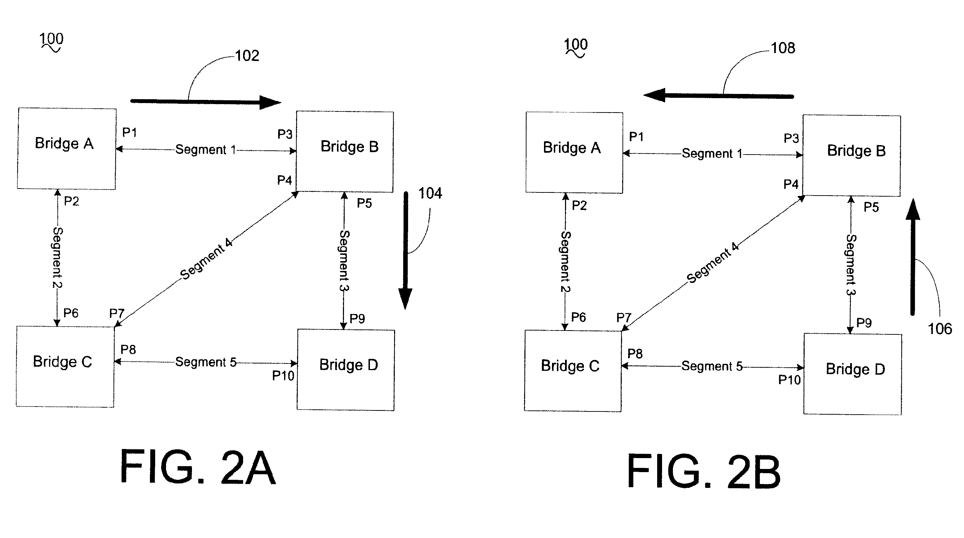

Referring now to FIGs. 2A and 2B, establishment of an example loop free network according to an embodiment of the invention by using type 2 BDPUs for communicating between bridges is described. Consider for example that a communicative link needs to be set up between root bridge Bridge A and Bridge D. one of the two bridges can first send a communicative type 2 BDPU message, or a first message, depicted by arrows 102 and 104 as sent from Bridge A to bridge D via ports P1, P3, P5, and P9 and links Segment 1 and Segment 3.

In one embodiment, the type 2 BDPU sent from Bridge A to Bridge D is a routed message and is not a broadcast message. In other words, the type 2 BDPU message may be sent by Bridge A and transmitted only on port P1 of Bridge A and then forwarded only on port P5 of Bridge B to Bridge D. To further clarify, the type 2 BDPU between Bridge A and Bridge D may not have been transmitted on port P2 of Bridge A and port P4 of Bridge B, when trying to establish a potential communicative pathway to the root bridge via links Segment 1 and Segment 3.

The type 2 BDPU can be a data packet that includes several data fields including, but not limited to, address of the root bridge, priority of the root bridge, address of the bridge to be linked to the root bridge, and priority of the bridge to be linked to the root bridge. The type 2 BDPU may not have a payload.

Once the message in the form of the type 2 BDPU is received by Bridge D from the root bridge Bridge A, Bridge D may extract information from the type 2 BDPU and then respond with a confirmation type 2 BDPU message, or a second message, over a reciprocal path as depicted by arrows 106 and 108. If the root bridge Bridge A receives the confirmation type 2 BDPU, then the root bridge Bridge A may establish a communicative link between Bridge D and itself by placing ports P1, P3, P5, and P9 in a forwarding state to provide a communicative pathway using links Segment 1 and Segment 3. The data fields of the type 2 BDPU of the confirmation message from Bridge D to Bridge A may be similar to the first communicative type 2 BDPU from Bridge A to Bridge D.

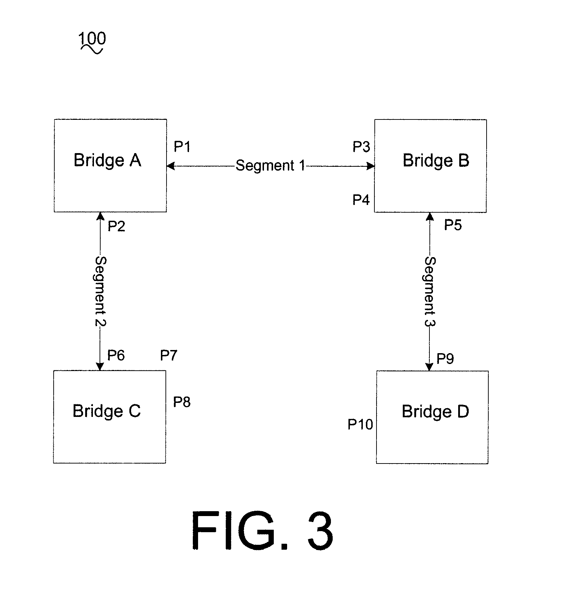

Referring now to FIG. 3 and still considering the above example of establishing a communicative pathway between root bridge Bridge A and Bridge D, when a communicative pathway is established by the root bridge Bridge A, all other pathways may be disabled to prevent loops in the network 100. Therefore, when a communicative pathway between Bridge A and Bridge D is established via links Segment 1 and Segment 3, the root bridge Bridge A may further disable other pathways via links Segment 4 and Segment 5 as depicted, by placing ports P4, P7, P8, and P10 in a blocking state.

Still referring to FIG. 3, it can be seen that there is one and only one path between any bridge Bridge B, Bridge C, and Bridge D and the root bridge Bridge A. In such a network 100 configuration, there may not be any loops in the network that can raise the possibility of a broadcast storm.

In the example discussed above in conjunction with FIGs. 2A, 2B, and 3, a two step process can be implemented to establish a communicative pathway between the bridge and the root bridge, involving bi-directional communication between the bridge and the root bridge. As such, both the root bridge and the bridge are aware of a physical presence of the other links and ports used for the first and second messages. Furthermore, if there are any changes in the topology of the network 100, for example due to failure of a port transceiver, the same process can be used to establish an alternative pathway. Again considering the above example to illustrate this concept, if port transceiver P9 fails and the communications pathway established over links Segment 1 and Segment 3 no longer functions, then the root bridge Bridge A may send a first message in the form of a type 2 BDPU to Bridge D via links Segment 2 and Segment 5. Bridge D may respond to the first message with a second message sent from Bridge D to Bridge A via links Segment 5 and Segment 2. In response, the root bridge may establish the alternative communicative pathway and disable all other potential pathways by placing the appropriate ports in a blocking state. In this case, ports P2, P6, P8 and P10 may be placed in a forwarding state and ports P4, P5, P7, and P9 may be placed in a blocking state.

In one embodiment, the lowest cost path may be selected by the root bridge to establish a potential communicative link between itself and another bridge. In other words, considering the above example, the root bridge A may have determined that the communicative pathway comprising Segment 1, Segment 3 and ports P1, P3, P5 and P9 are lower cost than alternative communicative pathways between Bridge A and Bridge D, such as via Segment 1, Segment 4, Segment 5 and ports P1, P3, P4, P7, P8, and P10. Cost determination of a communicative pathways may consider elements including, but not limited to, the latency of pathways, the bandwidth of the pathways, the energy consumption per bit on pathways, processing bandwidth required of the root bridge using each pathway, or combinations thereof.

In other embodiments of the invention, the choice of establishing a pathway by the root bridge may consider an overall cost for the network as a whole rather than on a link by link basis. In other words, a root bridge may establish a pathway to a bridge that is not the lowest cost path to that bridge if holistically the communicative pathway cost of the network is reduced or minimized. Such holistic cost determination may involve statistical analysis of historical data, neural network analysis, Monte Carlo analysis, or the like.

Although the process of establishing a communicative pathway between the root bridge and another bridge is depicted as the root bridge sending the first communicative message, it is not necessary for the root bridge to send the first communicative message according to an embodiment of the invention. In fact, the first communicative message can be sent from the bridge that needs to establish a connective pathway to the root bridge. Following that, the root bridge may provide the confirmation message and a communicative pathway may be established by placing the appropriate ports of the network in a forwarding state.

It should be noted, that the network topologies of the network 100 may be modified in various ways in accordance with certain embodiments of the invention. For example, in certain embodiments, one or more nodes may be placed and interconnected at a different location relative to the other nodes on the network 100. Additionally, in other embodiments, other nodes can be added or removed from the network 100.

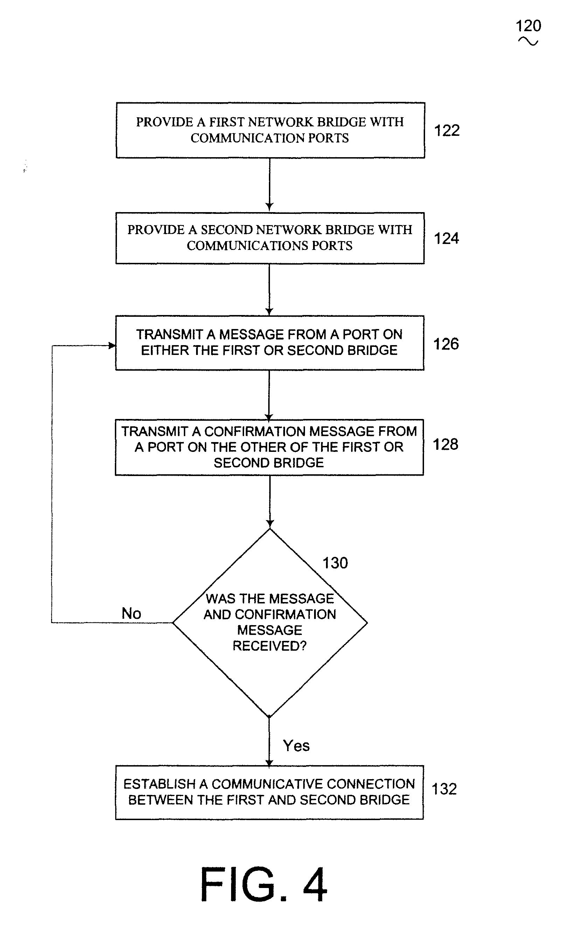

Referring now to FIG. 4, an example method 120 for establishing a communicative pathway between a first and second bridge is disclosed. At block 122, a first network bridge with communication ports is provided. At block 124, a second network bridge with communication ports is provided. Either of the first or second network bridge may be the root bridge in a network. At block 126, a message can be transmitted from a port on either the first or the second bridge. The message may be for example a type 2 BDPU data packet as discussed with reference to FIGs. 2A and 2B. It should be noted that the message may be transmitted by either a root bridge or a non-root bridge. At block 128, a confirmation message can be transmitted by the bridge that received the message at block 126 via the port on which the message was received. At block 130, it is determined if the message and confirmation message were received. If it is determined at block 130 that the message and the confirmation message were not received, then the method 120 returns to block 126 to again try to establish a communicative pathway. If however, at block 130 it is determined that the message and the confirmation message were received by the intended bridges, then a communicative pathway can be established between the first and the second bridge.

It should be noted, that the method 120 may be modified in various ways in accordance with certain embodiments of the invention. For example, one or more operations of method 120 may be eliminated or executed out of order in other embodiments of the invention. Additionally, other operations may be added to method 120 in accordance with other embodiments of the invention.

While certain embodiments of the invention have been described in connection with what is presently considered to be the most practical and various embodiments, it is to be understood that the invention is not to be limited to the disclosed embodiments, but on the contrary, is intended to cover various modifications and equivalent arrangements included within the scope of the appended claims. Although specific terms are employed herein, they are used in a generic and descriptive sense only and not for purposes of limitation.

This written description uses examples to disclose certain embodiments of the invention, including the best mode, and to enable any person skilled in the art to practice certain embodiments of the invention, including making and using any devices or systems and performing any incorporated methods. The patentable scope of certain embodiments of the invention is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

## Claims

1. A communication bridge comprising:
at least one port;
one or more paths, each path connected to one or more of the at least one ports; and,
a bridge controller controlling a state of each of the at least one ports,
wherein a message is received at one of the at least one port via the corresponding path and a second message is transmitted by the communication bridge on the same one of the at least one port upon receiving the message.

2. The communication bridge of claim 1, wherein the bridge controller determines if the second message was received by a destination bridge and if the second message was received by the destination bridge, then the bridge controller placing the one of the at least one port in a forwarding state.

3. The communication bridge of claim 1 or claim 2, wherein the bridge controller places the one of the at least one port in a blocking state if the second message was not received by a destination bridge.

4. The communication bridge of claim 1, 2 or 3, wherein the destination bridge is a root bridge.

5. The communication bridge of any one of claims 1 to 4, wherein the bridge controller establishes a communicative connection between the communications bridge and a destination bridge if the one of the at least one port is placed in a forwarding state.

6. The communication bridge of claim 5, wherein the bridge controller establishes only a single communicative connection between the communications bridge and the destination bridge.

7. The communication bridge of any preceding claim, wherein one of the first message and the second message is a type 2 bridge protocol data unit (BPDU).

8. A system comprising:
a root bridge having at least one port;
a second bridge having at least one port and a second bridge controller for controlling the state of the at least one port of the second bridge; and,
at least one path between the root bridge and the second bridge, each path corresponding to one of the at least one port of the second bridge,
wherein one path selected from the at least one path is established as a communicative pathway between the root bridge and the second bridge by sending a first and second message between the root bridge and the second bridge and the second bridge controller placing the port corresponding to the communicative pathway in a forwarding state if the first and second messages were received.

9. The system of claim 8, further comprising an alternative port of the at least one port of the second bridge is identified other than the port corresponding to the communicative pathway for communicating with the root bridge.

10. The system of claim 9, wherein the alternative port is placed in a blocking state when the port corresponding to the communicative pathway is placed in a forwarding state.

11. The system of claim 8, 9 or 10, wherein one of the first message and second message contains information about an address of the root bridge, a priority of the root bridge, an address of the second bridge, and a priority of the second bridge.

12. A method comprising:
providing (122) a first bridge with at least one port;
providing (124) a second bridge with at least one port;
transmitting (126) a first message from one of a first port on the first bridge selected from the at least one port of the first bridge and a second port on the second bridge selected from the at least one port of the second bridge;
transmitting (128) a second message from the other of the first port and the second port; and,
establishing a connection between the first bridge and the second bridge via the first port and the second port if both the first and the second message were received by one of the first and second bridge.

13. The method of claim 12, wherein establishing a connection between the first bridge and the second bridge further comprises placing the first and second port in a forwarding state.

14. The method of claim 12 or claim 13, further comprising placing the second port in a blocking state if both the first and the second message were not received by one of the first and second bridge.

15. The method of claim 12, 13 or 14, further comprising identifying at least one alternative port of the at least one port of the second bridge other than the second port for communicating with the first bridge, wherein, preferably, the at least one alternative port is placed in a blocking state when the second port is placed in a forwarding state.

16. The method of claim 12, 13, 14 or 15, wherein establishing a connection between the first bridge and the second bridge further comprises having only a single communicative path between the first bridge and the second bridge.
